# EUROPEAN PATENT SPECIFICATION

(11) **EP 1 146 990 B1**
(45) Date of publication and mention of the grant of the patent: **24.03.2004**
(21) Application number: 99954562.7
(22) Date of filing: 23.09.1999
(51) Int. Cl.: B23K 26/16

(54) **A METHOD AND AN APPARATUS FOR REMOVING SMALL-SIZED CUT-OUT PIECES FROM A LASER CUTTING PROCESS**
VERFAHREN UND VORRICHTUNG ZUM ENTFERNEN VON KLEINEN AUSGESCHNITTENEN STÜCKEN AUS EINEM LASERSCHNEIDVERFAHREN
PROCEDE ET APPAREIL D'ELIMINATION DES PETITES PIECES DECOUPEES PROVENANT D'UN PROCESSUS DE DECOUPAGE AU LASER

(30) Priority: 01.10.1998 SE 9803329
(43) Date of publication of application: 24.10.2001
(73) Proprietor: Permanova Lasersystem AB, 431 37 Mölndal (SE)
(72) Inventor: ROOS, Sven-Olov, S-443 34 Lerum (SE); SANDSTRÖM, Ulf, S-430 80 Asperö (SE); BENGTSSON, Daniel, S-428 34 Kallered (SE)
(74) Representative: Olsson, Gunnar
(86) International application number: PCT/SE1999/001666
(87) International publication number: WO 2000/020159

(56) References cited:
- EP-A1- 0 618 037
- EP-A1- 0 732 169
- AT-B- 402 169
- DE-A1- 3 923 829
- DE-A1- 4 210 518
- DE-U1- 29 518 138
- US-A- 3 626 141
- US-A- 5 812 314
- PATENT ABSTRACTS OF JAPAN & JP 60 049 887 A (MITSUBISHI JIDOSHA KOGYO KK)
- PATENT ABSTRACTS OF JAPAN & JP 62 179 888 A (NEC CORP) 07 August 1988

## Description

The present invention relates to a method and an apparatus for removing small-sized cut-out pieces or scrap when cutting holes and other small openings in a workpiece by means of a cutting laser beam.

Laser cutting has been established as a flexible and powerful tool for instance in the automobile industry. Flexible cutting of variant holes late in the manufacturing cycle has a big potential.

In laser cutting a laser beam is focused on the workpiece by means of a lens or a mirror. Due to the high power of the focused laser beam, the material in the workpiece is vaporized in the cutting point. By moving the laser beam relative to the workpiece, holes and other openings with the desired configuration can be cut-out from the workpiece, for instance a car body sheet metal. Positioning and moving the laser beam relative to the workpiece is often carried out by means of an industrial robot.

It is necessary to take care of the centre scrap or other cut-out piece after the cutting so that it is not left in the finished product where it could disturb the function of the product. Today there is no quite satisfactory method to take care of such scrap. As the scrap pieces are usually small, typically around 1 cm², and are easily spread out in an uncontrollable way after they have been cut out from the workpiece, it has in practice been necessary to handle them more or less manually.

Normally a gas flow is arranged through the cutting nozzle, coaxially with the laser beam, which makes it even more difficult to remove the scrap pieces. The gas itself is either an active gas, such as oxygen, or a passive gas, usually nitrogen. The pressure in the nozzle is normally between 3-20 bar, the higher pressure is then used when cutting with a passive gas, while the lower pressure is used when cutting with an active gas. The outlet opening of the nozzle has usually a diameter of about 1 mm. Around the cutting spot, therefore, the work-piece (metal sheet) is exposed to a force of about 2 N at a 20 bar pressure. A gas flow like this is necessary for blowing away melted, superfluous material produced around the cutting point so that the cut surfaces are kept clean and smooth.

When a small disc has been cut out from the workpiece, substantially half of said force is acting upon the disc and makes the cut-out disc even more uncontrollable. So the coaxially arranged gas flow makes it more difficult to take care of the scrap in a safe way.

As the cut-out pieces are comparatively small they can easily fasten or disappear into inaccessible corners of the product being worked upon. It should therefore be understood that such handling of the scrap manually or by means of robotics can hardly be reproduced in a safe manner.

The object of the present invention is to provide a method and an apparatus that takes care of the scrap and small cut-out pieces that are produced when holes are made in the workpiece, in such a way that they are prevented from falling down into the product worked upon where they might disturb the function of the finished product.

A further object of the invention is to provide a method and an apparatus which is uncomplicated but still has a high degree of reproduction with respect to the handling of the small cut-out pieces and which does not disturb the laser optics or the coaxial gas flow.

According to the invention a suction force is applied above the detail to be cut out by the laser beam, that the force is applied asymmetrically with respect to the laser beam and that the cutting of a detail is carried out in such a way that when the cutting of the detail is finished substantially all of the cut-out detail is covered by the suction force.

The suction force is applied in such a way with respect to the cutting laser beam that the cutting point of the laser beam during the cutting process is placed close to the edge (peripheral portion) of the contour (suction area) formed by the suction force on the workpiece.

Document AT-B-402 169 discloses a similar apparatus for removing melted cut out material from a laser cutting process. However, there is no indication that the cut-out material really has been removed by the suction device.

The method and the apparatus according to the present invention are defined in claims 1 and 2 and characterised in that a metal detector or a rattle detector is arranged in connection to the suction device and a container for collecting the cut-out scrap removed by the suction device, respectively, for indicating that the cut-out detail really has been removed by the suction device.

According to a preferred embodiment the suction device has a recess for the cutting nozzle so that it follows the movement of the cutting nozzle relative to the workpiece during a cutting process.

In the following an example of the invention will be described more in detail with reference to the accompanying drawings, wherein
figure 1 illustrates a nozzle for laser cutting in a workpiece,
figure 2 illustrates the nozzle together with a suction device according to the invention, and
figure 3 illustrates the process when cutting out a small, round disc.

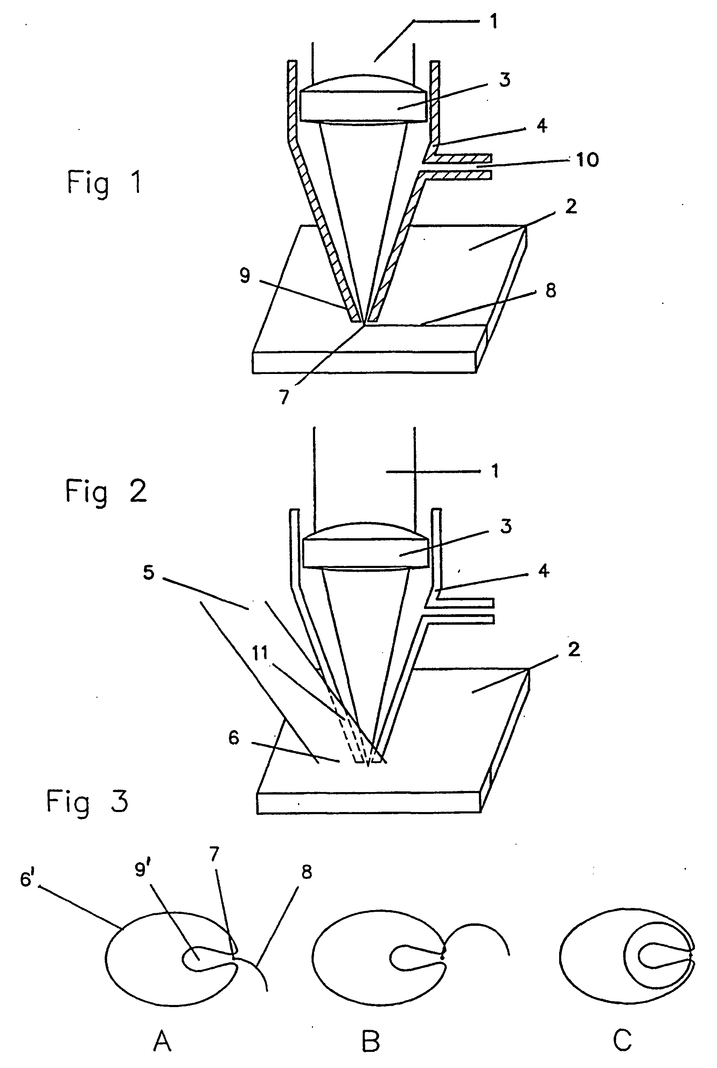

Figure 1 illustrates schematically a nozzle 4 for laser cutting in a workpiece 2, for instance a sheet metal part for an automobile. By means of the nozzle the incoming laser beam 1 is focused on the workpiece 2 by means of lens 3 or a mirror. The focused laser beam hits the workpiece in a cutting point 7 and by moving the nozzle relative to the workpiece 2 details with a desired configuration can be cut-out from the sheet metal. In the figure it is illustrated a cutting line 8 after a transverse movement between the workpiece and the cutting nozzle. The laser cutting process is often used for cutting small so-called variant holes in the metal sheet late in a manufacturing cycle of an automobile, in which case the cut-out piece has the form of a disc of approximately 1 cm². It is most important in this phase of the manufacturing process that no loose, scrap pieces are being left as such pieces might disturb the function of the finished product.

The nozzle has an inlet pipe 10 for connecting to a gas source to provide a gas flow coaxially with the laser beam and emanating through the opening 9 in the nozzle. As already mentioned the gas pressure in the nozzle is about 3-20 bar depending on the gas which is used. The nozzle pipe opening 9 is in this case about 1 mm diameter. This means that the region of the workpiece (metal sheet) around the cutting spot is exposed to a force of about 2 N at a gas pressure of 20 bar. When a small disc has been cut-out by the laser beam, approximately half of the force acts upon the disc and half of the force on the remaining base material. As also mentioned in the introductory portion of the specification this force makes the disc to be thrown away in an even more uncontrollable way.

According to the invention a suction device 5 is applied above the cut-out detail in connection to the cutting nozzle 4 so that an opposite force acts upon the workpiece 2. The suction device is illustrated schematically in figure 2 in the form of an inclined suction tube with a suction nozzle or opening 6 arranged close to and parallell to the workpiece so that only a small gap is formed between the suction surface and the workpiece to provide a sufficient low pressure in the suction device. The gap width is therefore 1 mm or less. The effective suction surface provided by the opening should be big enough to cover the cut-out detail. The suction tube has preferably a circular section with a diameter somewhat larger than the diameter of the disc or other cut-out detail to be removed by the suction tube, i e in the range of about 1 or a few cm². Due to the inclination the projection of the suction device opening on the base (workpiece) forms an elliptic contour 6', as illustrated in figure 3. A low pressure of about 0,5 bar can easily be achieved in a suction device of this type. As the disc has a typical size of 1 cm², the suction force is around 5 N. This means that the suction force is about 5 times the pressure force from the gas flow. A requirement for a proper function is the asymmetric location of the suction device relative to the laser beam so that the suction force on the disc can be maintained for a sufficiently long time to move the disc away from the influence of the coaxial gas flow.

As illustrated in figure 2 the suction device 5 is therefore arranged at the side of the cutting nozzle 4 in such a way that cutting point 7 is located close to the edge of the opening 6 of the suction pipe. This is achieved by a recess 11 for the cutting nozzle 9 in the wall of the suction pipe. Compared to the workpiece 2 the cutting point 7 is then located in the peripheral part of the contour 6' formed by the suction opening on the base (workpiece). In order to maintain the necessary low pressure in the suction pipe the recess is tightened against the cutting nozzle. Moreover, the size and location of the recess depends on the inclination of the suction pipe and available space in connection to the cutting nozzle.

As the suction device is fixed to the cutting nozzle 4 it follows the motion of the cutting nozzle relative to the workpiece. A process for cutting out a circular disc is illustrated in figure 3 together with the contour 6' of the suction opening and the contour 9' of the cutting nozzle. In figure 3A the cutting of the disc has just started with a quarter of the cutting path 8 finished. In figure 3B half of the cutting path has been finished and in figure 3C the cutting is almost complete. In this position the cut-out disc is entirely covered by the suction opening. According to the invention the cutting operation is performed in such a way that it is completed when the suction opening entirely covers the disc. By testing it has been proved that this technique for removing the cut-out discs by the suction device has a high degree of prediction.

In order to indicate that a disc really has been sucked up either a metal detector is arranged at the suction pipe or a rattle detector is arranged in the suction container. The suction device is made of a nonconducting material, for instance a plastic or ceramic material, so that capacity control means could be used for the cutting optics.

The invention is not limited to the example that has been described here but can be varied within the scope of the following claims.

## Claims

1. A method for removing small-sized cut-out pieces when cutting holes and other minor openings in a workpiece by means of a cutting laser beam wherein a suction force is applied above the detail to be cut-out by the laser beam, that the force is applied asymmetrically with respect to the cutting laser beam so that the cutting point of the laser beam during the cutting process is placed close to the edge of the contour formed by the suction force on the workpiece and that the cutting of a detail is carried out in such a way that when the cutting of the detail is finished, substantially all of the cut-out detail is covered by the suction force **characterized in that** a metal detector or a rattle detector is arranged in connection to the suction device and a container for collecting the cut-out scrap removed by the suction device (5), respectively, for indicating that the cut-out detail really has been removed by the suction device.

2. An apparatus for removing small-sized cut-out pieces when cutting holes and other minor openings in a workpiece (2) by means of a cutting laser beam (1) comprising a cutting nozzle (4) having a gas flow coaxially arranged around the laser beam, a suction device (5) arranged above the detail to be cut-out in the workpiece by means of the laser beam and asymmetrically arranged relative to the cutting laser beam so that the laser cutting point (7) during the cutting process is placed close to the edge of the contour formed by the suction nozzle (6) on the workpiece **characterized in that** a metal detector or a rattle detector is arranged in connection to the suction device (5) and a container for collecting the cut-out scrap removed by the suction device (5), respectively, for indicating that the cut-out detail really has been removed by the suction device.

3. Apparatus according to claim 2 **characterised in that** the suction device has a recess for the cutting nozzle (9) so that it follows the movement of the cutting nozzle (4) relative to the workpiece (2) during a cutting process.

4. Apparatus according to claim 3 **characterised in that** the suction device (5) has a low pressure of about 0,5 bar.

5. Apparatus according to claim 3 **characteris-ed in that** in use the suction nozzle (6) is located at a small distance above the workpiece (2) with the suction surface substantially parallell to the workpiece and arranged to fully cover the cut-out detail when the cutting is completed.

## Patentansprüche

1. Verfahren zum Entfernen von kleinen ausgeschnittenen Teilen beim Schneiden von Löchern und anderen kleineren Öffnungen in einem Werkstück mittels eines Schneidelaserstrahls, wobei eine Saugkraft über dem vom Laserstrahl auszuschneidenden Bereich angelegt wird, wobei die Kraft asymmetrisch in Bezug auf den Schneidelaserstrahl angelegt wird, derart, dass der Schneidepunkt des Laserstrahls während des Schneidevorgangs nahe dem Rand der von der Saugkraft auf dem Werkstück gebildeten Kontur liegt und wobei das Ausschneiden eines Bereichs derart ausgeführt wird, dass bei Beendigung des Schneidens des Bereichs im wesentlichen der gesamte ausgeschnittene Bereich von der Saugkraft abgedeckt wird, **dadurch gekennzeichnet, dass** ein Metalldetektor oder ein Ratterdetektor in Verbindung mit der Saugvorrichtung bzw. einem Behälter zum Auffangen des von der Saugvorrichtung (5) entfernten ausgeschnitten Abfalls vorgesehen ist zur Anzeige, dass das ausgeschnitte Teil tatsächlich von der Saugvorrichtung entfernt worden ist.

2. Vorrichtung zum Entfernen von kleinen ausgeschnittenen Teilen beim Schneiden von Löchern und anderen kleineren Öffnungen in einem Werkstück (2) mittels eines Schneidelaserstrahls (1), umfassend eine Schneidedüse (4) mit einem koaxial um den Laserstrahl herum angeordnetem Gasstrom, eine Saugvorrichtung (5), die oberhalb des in dem Werkstück mittels des Laserstrahls auszuschneidenden Bereichs angeordnet und asymmetrisch relativ zu dem Laserstrahl angeordnet ist, derart, dass der Laserschneidepunkt (7) während des Schneidevorgangs nahe dem Rand der von dem Saugmundstück (6) auf dem Werkstück gebildeten Kontur liegt, **dadurch gekennzeichnet, dass** ein Metalldetektor oder ein Ratterdetektor in Verbindung mit der Saugvorrichtung (5) bzw. einem Behälter zum Auffangen des von der Saugvorrichtung (5) entfernten ausgeschnittenen Abfalls vorgesehen ist zur Anzeige, dass das ausgeschnittene Teil tatsächlich von der Saugvorrichtung entfernt worden ist.

3. Vorrichtung nach Anspruch 2, **dadurch gekennzeichnet, dass** die Saugvorrichtung eine Aussparung für die Schneidedüse (9) aufweist derart, dass sie der Bewegung der Schneidedüse (4) relativ zu dem Werkstück (2) während eines Schneidevorgangs folgt.

4. Vorrichtung nach Anspruch 3, **dadurch gekennzeichnet, dass** die Saugvorrichtung (5) einen Unterdruck von ca. 0,5 bar hat.

5. Vorrichtung nach Anspruch 3, **dadurch gekennzeichnet, dass** im Betrieb die Saugdüse (6) in einen kleinen Abstand oberhalb des Werkstücks (2) angeordnet ist, wobei die Saugfläche im wesentlichen parallel zu dem Werkstück und derart angeordnet ist, dass sie bei Beendigung des Schneidvorgangs das ausgeschnittene Teil völlig überdeckt.

## Revendications

1. Procédé pour le retrait de pièces découpées de petites dimensions lors de la découpe de trous et autres petites ouvertures dans une pièce à usiner au moyen d'un faisceau laser de découpe, dans lequel une force d'aspiration est appliquée au-dessus du détail à découper par le faisceau laser, la force étant appliquée de façon asymétrique par rapport au faisceau laser de découpe, de sorte que le point de découpe du faisceau laser pendant le processus de découpe se trouve près du bord du profil formé par la force d'aspiration sur la pièce à usiner et la découpe d'un détail étant réalisée de telle sorte que, lorsque la découpe du détail est terminée, tout le détail découpé est substantiellement couvert par la force d'aspiration, **caractérisée en ce qu'**un détecteur de métal ou un détecteur de cliquetis est fixé en contact, respectivement, avec le dispositif d'aspiration et un conteneur récupérant les chutes de coupe retirées par le dispositif d'aspiration (5), pour indiquer que le détail découpé a effectivement été retiré par le dispositif d'aspiration.

2. Appareil pour le retrait de pièces découpées de petites dimensions lors de la découpe de trous et autres petites ouvertures sur une pièce à usiner (2) au moyen d'un faisceau laser de découpe (1) comprenant une buse de découpe (4) ayant un écoulement gazeux disposé co-axialement autour du faisceau laser, un dispositif d'aspiration (5) disposé au-dessus du détail à découper dans la pièce à usiner au moyen du faisceau laser et disposé de façon asymétrique par rapport au faisceau laser de découpe, de sorte que le point de découpe du faisceau laser (7), pendant le processus de découpe, se trouve près du bord du profil formé par la buse d'aspiration (6) sur la pièce à usiner, **caractérisé en ce qu'**un détecteur de métal ou un détecteur de cliquetis est fixé en contact, respectivement, avec le dispositif d'aspiration (5) et un conteneur récupérant les chutes de coupe retirées par le dispositif d'aspiration (5), pour indiquer que le détail découpé a effectivement été retiré par le dispositif d'aspiration.

3. Appareil selon la revendication 2 **caractérisé en ce que** le dispositif d'aspiration a un logement pour la buse de découpe (9) de sorte qu'il suit le mouvement de la buse de découpe (4) par rapport à la pièce à usiner (2) pendant le procédé de découpe.

4. Appareil selon la revendication 3 **caractérisé en ce que** le dispositif d'aspiration (5) a une pression basse d'environ 0,5 bar.

5. Appareil selon la revendication 3 **caractérisé en ce que**, en cours d'utilisation, la buse d'aspiration (6) est située à une courte distance au-dessus de la pièce à usiner (2) avec la surface d'aspiration en grande partie parallèle à la pièce à usiner et disposée pour couvrir entièrement le détail découpé une fois la découpe terminée.
